# EUROPEAN PATENT APPLICATION

(11) **EP 4 759 574 A1**
(43) Date of publication of application: **17.06.2026**
(21) Application number: 25222666.7
(22) Date of filing: 11.12.2025
(51) Int. Cl.: B60G 99/00, B62D 35/00, B62D 35/02

(54) **BODYWORK FOR A MOTOR VEHICLE AND A METHOD FOR ASSEMBLING A MOTOR VEHICLE**

(30) Priority: 12.12.2024 IT 202400028272
(71) Applicant: FERRARI S.p.A., 41100 Modena (IT)
(72) Inventor: FAVARETTO, Fabrizio, 41100 Modena (IT)
(74) Representative: Studio Torta S.p.A.

(57) **Abstract**

A bodywork (10) for a motor vehicle (1) is described comprising a plurality of surfaces (11, 12) and a plurality of openings (13, 14) passing through such surfaces (11, 12) along a first direction (B, C) and configured to be passed through by components (21) of the suspensions (20) of the motor vehicle (1). The bodywork (10) comprises a plurality of oblong elements (15) provided with respective first ends (15a) and second ends (15b) opposite to each other along a second direction (Z) transversal to the first direction (B, C). The oblong elements (15) are deformable and attached to a surface (11, 12) at the respective first ends (15a) so as to cover at least partially the openings (13, 14). The second ends (15b) are free and movable with respect to the respective openings (13, 14).

## Description

### CROSS-REFERENCE TO RELATED APPLICATIONS

This patent application claims priority from Italian patent application no. 102024000028272 filed on December 12, 2024, the entire disclosure of which is incorporated herein by reference.

### TECHNICAL FIELD

The present invention relates to a bodywork for a motor vehicle. The invention further relates to a method for assembling a motor vehicle.

### BACKGROUND

Motor vehicles are known essentially comprising:
- a frame;
- a bodywork, which covers the frame or which is integrated in the frame;
- a plurality of wheels rotatable relative to the frame about respective rotational axes; and
- a plurality of suspensions, which operatively connect the wheels to the frame and which allow relative movements between them.

In a known manner, the suspensions have the purpose of isolating the frame and the other suspended masses of motor vehicles from the roughness and irregularities of the ground on which the wheels rest.

In most motor vehicles, the suspensions are completely contained in the volume defined by the bodywork. However, motor vehicles are known which are called "open-wheel" motor vehicles, in which the wheels are arranged externally to such volume.

In fact, the arrangement of the wheels outside the volume defined by the bodywork enables defining the geometry of the bodywork with great freedom and, sometimes, meeting specific aerodynamic needs of the motor vehicle.

In detail, in "open-wheel" motor vehicles, the suspensions extend from the frame to the wheels, passing through suitable openings made in the bodywork.

The aforesaid openings are called upon to carry out two fundamental functions: on the one hand, they must allow the suspensions to shake without interfering with the bodywork; on the other hand, they must prevent, as much as possible, the airflow that hits the cars from passing through them in an undesired manner.

It has been observed that "open-wheel" motor vehicles of the known type leave room for improvements, as the openings do not always efficiently carry out the two functions described above.

The need is therefore felt to obtain a motor vehicle in which the suspensions extend at least partially outside the volume defined by the bodywork and in which the shaking of the suspensions is enabled in an efficient manner, limiting the interferences with the bodywork and with the aerodynamics of the motor vehicle.

An object of the invention is to satisfy the need set forth above, preferably in a simple and cost-effective manner.

### DESCRIPTION OF THE INVENTION

The object is achieved by a bodywork as defined in claim 1. The object is also achieved by a method for assembling a motor vehicle as defined in claim 10.

The dependent claims define particular embodiments of the invention.

### BRIEF DESCRIPTION OF THE DRAWINGS

In the following, an embodiment of the invention is described for a better understanding thereof, by way of nonlimiting example and with reference to the accompanying drawings, wherein:
- Figures 1, 2 and 3 are perspective views of a portion of a motor vehicle in three respective operating positions comprising a bodywork according to the present invention and with parts removed for clarity; and
- Figure 4 is a further perspective view of the motor vehicle in the operating position illustrated in Figure 2, on an enlarged scale and with parts removed for clarity.

### EMBODIMENTS OF THE INVENTION

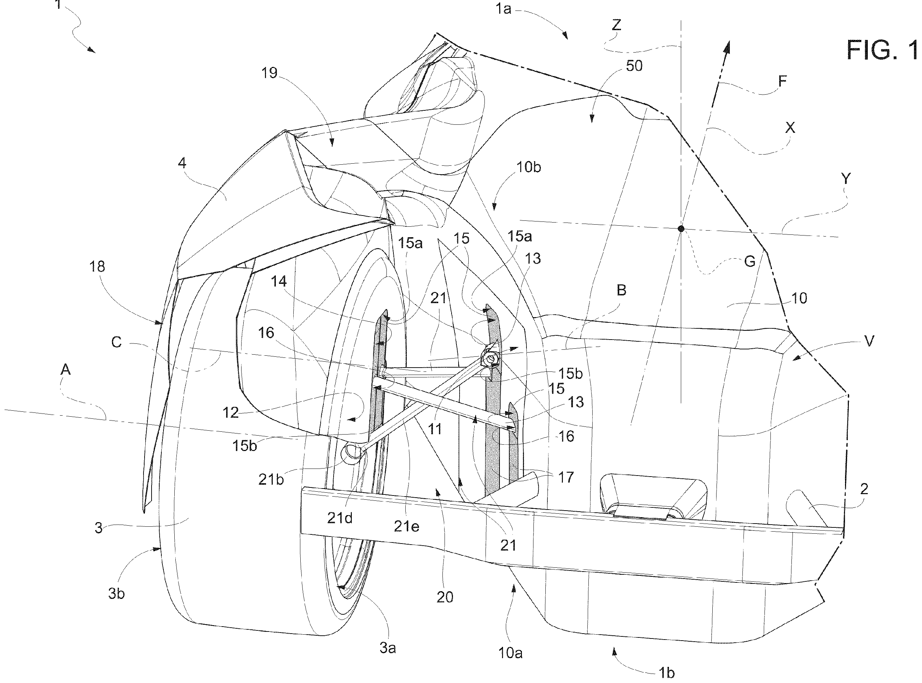

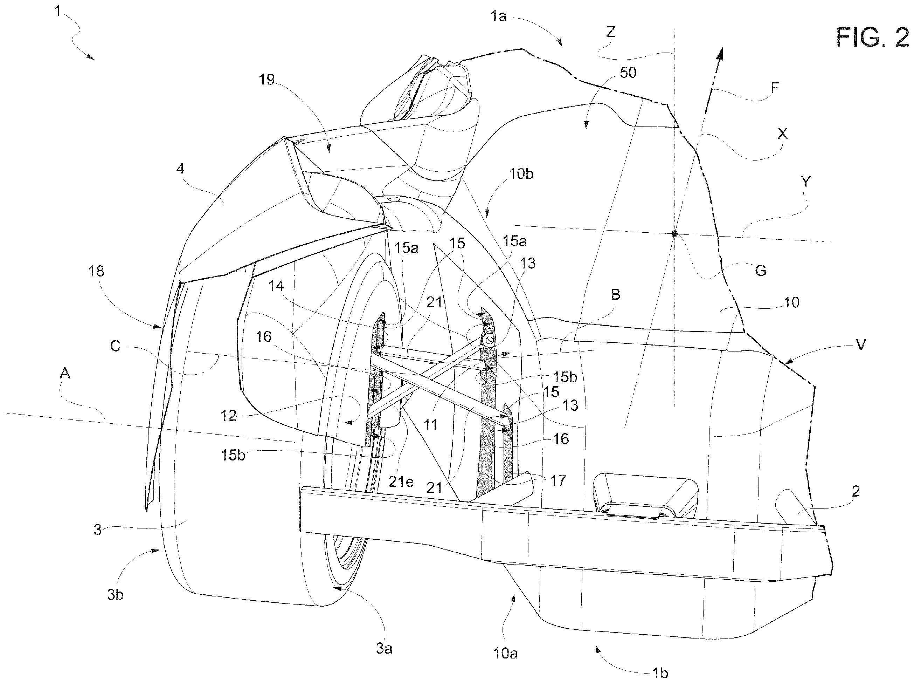

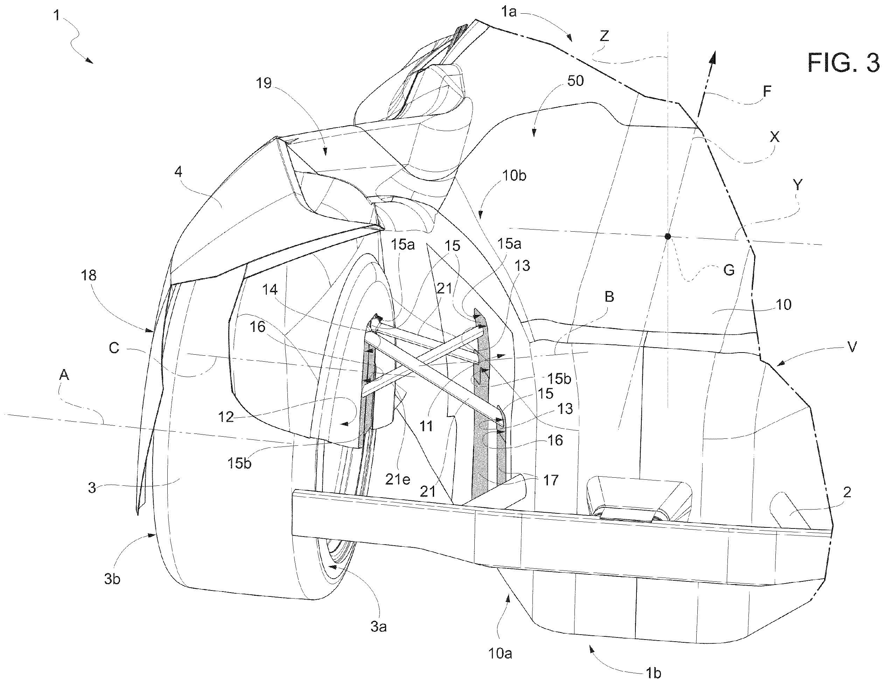

In Figures 1 to 4, reference numeral 1 is used to indicate, as a whole, a motor vehicle - illustrated only in part - according to the present invention.

The motor vehicle 1 comprises:
- a support structure 2, in particular a frame;
- a plurality of wheels 3 rotatable relative to the frame 2 about respective rotational axes A;
- a plurality of suspensions 20, which operatively connect the wheels 3 to the frame 2 and which are configured to allow the relative movement between the wheels 3 and the frame 2; and
- a bodywork 10, which covers and/or at least partly covers the frame 2.

The motor vehicle 1 further comprises:
- a passenger compartment, not illustrated, configured to house a driver and possible passengers; and
- propulsion means, not illustrated, operatively connected to at least some of the wheels 3 and configured to drive into rotation such wheels 3 about the respective rotational axes A.

Preferably and without this implying any loss of generality, the motor vehicle 1 is a vehicle with electric or hybrid traction. Therefore, the propulsion means comprise at least one electric motor.

An integral reference system can be associated with the motor vehicle 1, comprising:
- a direction X of longitudinal extension;
- a direction Z transversal to the direction X and vertical to the ground on which the motor vehicle 1 rests; and
- a direction Y transversal to the directions X and Z.

Preferably, the directions X, Y and Z are orthogonal to one another.

Considering an advancement direction F of the motor vehicle 1, the motor vehicle 1 further comprises a front portion 1a and a rear portion 1b. In particular, the motor vehicle 1 comprises two wheels 3 arranged on the part of the front portion 1a and two wheels 3 arranged on the part of the rear portion 1b. Unless otherwise indicated, every reference to the wheels 3 in the following of the present description is to be understood as a reference to the wheels 3 arranged on the part of the rear portion 1b.

In a known manner, each wheel 3 comprises a hub and a rim, which supports a tire and is connected to the hub by means of a plurality of spokes.

In a similarly known manner, the bodywork 10 comprises a plurality of surfaces 11, which form - as a whole - a casing 50. The casing 50 defines, in turn, a volume V within which the centre of gravity G of the motor vehicle 1 is arranged (Figures 1 to 3). Specifically, the volume V also contains the passenger compartment and/or the propulsion means of the motor vehicle 1.

It should be specified that the position of the centre of gravity G shown in the figures is shown by way of example and is not necessarily consistent with the dimensions and the proportions of the represented parts of the motor vehicle 1.

Preferably, proceeding from the front portion 1a to the rear portion 1b parallel to the direction X, the extension of the volume V parallel to the direction Y progressively decreases. In other words, the volume V has a tapered shape at the rear portion 1b.

As is illustrated in Figures 1 to 3, the wheels 3 are arranged externally with respect to the volume V. At the same time, preferably, the bodywork 10 comprises a plurality of portions 4, which are external with respect to the volume V, which cover part of the wheels 3 and are connected to the casing 50.

In detail, each wheel 3 comprises a face 3a facing the casing 50 and a face 3b opposed to the face 3a along the axis A and facing away from the casing 50. In addition, each portion 4 comprises:
- a surface 12 arranged on the side of the face 3a;
- a surface 18 arranged on the side of the face 3b and spaced away from the surface 12 parallel to the rotational axis A of the relative wheel 3; and
- a portion 19 extending between the surface 12 and the surface 18 parallel to the rotational axis A.

In further detail, the surface 12 is flat and directed parallel to the direction Z.

Furthermore, in the illustrated embodiment, the bodywork 10 comprises two said surfaces 11 at the rear portion 1b, each of which is at least partially aligned with a respective wheel 3 along the direction X.

In detail, each of the two surfaces 11 faces the surface 12 of a respective wheel 3 arranged at the rear portion 1b. In further detail, the surfaces 11 are arranged at the tapered region of the casing 50.

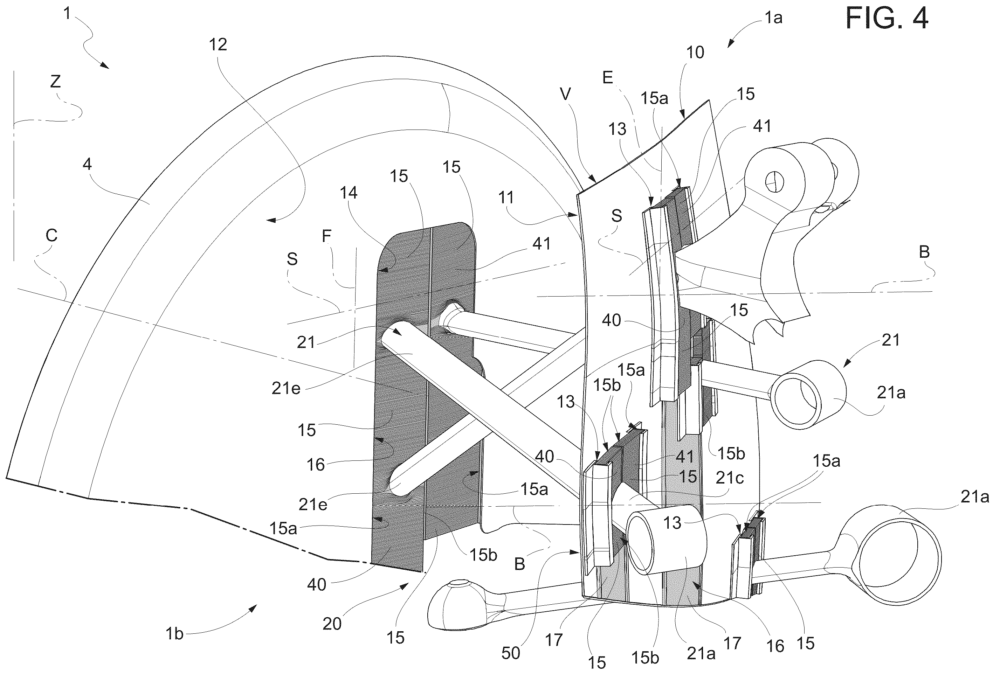

As is illustrated in the accompanying figures, the bodywork 10 comprises a plurality of openings 13 passing through the surfaces 11 and a plurality of openings 14 passing through the surfaces 12. Furthermore, each opening 13, 14 comprises a perimeter 16, which delimits it (Figure 4) .

In detail, the openings 13 pass through the surfaces 11 along a direction B. Preferably, the direction B lies in a plane perpendicular to the direction Z and is parallel or transversal to the direction Y; the openings 14 pass through the surface 12 along a direction C, which is parallel or substantially parallel to the rotational axis A of the respective wheel 3.

In further detail, the openings 13 and 14 have a rectangular or slot shape.

Furthermore, considering the direction Z, the bodywork 10 comprises an end 10a adapted to face the ground and an end 10b facing away from end 10a. In detail, the openings 13 and 14 extend and/or pass up to the end along the direction Z. In further detail, the openings 13 and 14 extend from a portion of the bodywork 10 interposed between the end 10a and the end 10b along the direction Z to the end 10a.

The suspensions 20 essentially comprise:
- an elastic element and a shock absorber, not illustrated; and
- one or more arms 21, which operatively connect the frame 2 to a respective wheel 3, in particular to the hub of the wheel 3.

The suspensions 20 are, for example, of the quadrilateral type.

It is further noted that the number of arms 21 shown in the figures is for illustrative purposes only and must not be considered as binding or limiting in any manner.

As a consequence of the relative movements between the frame 2 and the wheels 3, the movement vector of the arms 21 comprises a component, which is parallel to the direction Z. Specifically, Figures 1, 2 and 3 illustrate the arms 21 in three respective different operating positions along the direction Z.

Furthermore, unless otherwise indicated, every reference to the suspensions 20 in the following of the present description is to be understood as a reference to the suspensions 20 which operatively connect the frame 2 to the wheels 3 arranged on the part of the rear portion 1b.

As is illustrated in the accompanying figures, the arms 21 pass through the openings 13 and 14. In detail, each such arm 21 comprises:
- an end 21a arranged within the volume V;
- an end 21b opposed to the end 21a along the direction of longitudinal extension of the arm 21;
- a stretch 21c, extending between the end 21a and an opening 13;
- a stretch 21d, extending between the end 21b and an opening 14; and
- a stretch 21e, extending externally to the volume V and interposed between the stretch 21c and the stretch 21d along the direction of longitudinal extension of the arm 21.

Advantageously, the bodywork 10 comprises a plurality of oblong elements 15, which are elongated along respective directions of longitudinal extension S (Figure 4). Each oblong element 15 comprises respective ends 15a, 15b opposed to each other along the relative direction of longitudinal extension S. The oblong elements 15 are deformable and attached to the surfaces 11 and 12 at the respective ends 15a so as to cover at least partially a respective opening 13, 14; the ends 15b of the oblong elements 15 are instead free and movable with respect to the respective openings 13, 14. In detail, the end 15a of each oblong element 15 is attached at the profile 16 of the respective opening 13, 14.

Each oblong element 15 can oscillate about the end 15a with respect to the respective opening 13, 14. In further detail, each oblong element 15 attached to a surface 11 is rotatable about a respective direction E transversal to the direction B and parallel or substantially parallel to the direction Z, i.e. about the direction of the height of the respective opening 13; each oblong element 15 attached to the surface 12 is rotatable about a respective direction F transversal to the direction C and parallel or substantially parallel to the direction Z, i.e. about the direction of the height of the respective opening 14 (Figure 4).

In further detail, the oblong elements 15 arranged at an opening 13 are arranged so that the respective directions S are transversal to the respective directions B and E; the oblong elements 15 arranged at an opening 14 are arranged so that the respective directions S are transversal to the respective directions C and F.

Preferably, moreover, the ends 15a of the oblong elements 15 attached to the surfaces 11 are arranged on the part of the volume V (Figure 4); the ends 15a of the oblong elements 15 attached to the surfaces 12 are arranged on the part of the surface 12 facing the respective wheel 3.

As is illustrated in the figures, the oblong elements 15 are adapted to cooperate in contact with the arms 21 passing through the relative openings 13, 14. In particular, the oblong elements 15 attached to the casing 50 are adapted to rotate about the respective directions E as a function of the forces exchanged with the arms 21; similarly, the oblong elements 15 attached to the surface 12 are adapted to rotate about the respective directions F as a function of the forces exchanged with the arms 21.

In detail, the oblong elements 15 are threadlike or ribbon-like. For example, each oblong element 15 comprises a thread, a bristle or a ribbon.

Preferably, the bristles or the ribbons are made of an elastomeric material, for example polyurethane or polyethylene.

As is illustrated in detail in Figure 4, for each opening 13, 14, the bodywork 10 comprises two groups 40, 41 of oblong elements 15 juxtaposed along the respective directions S, i.e. along the direction of the width of the opening 13, 14.

In detail, each group 40, 41 comprises a plurality of oblong elements 15 arranged in succession and/or juxtaposed along the directions B, C and/or E, F. In other words, each group 40, 41 is similar to a brush (or a paintbrush) formed by a multitude of oblong elements 15.

In further detail, the groups 40, 41 are arranged so that the ends 15b of the oblong elements 15 of one of the two groups 40, 41 face the ends 15b of the oblong elements 15 of the other 41, 40 of the two groups. In addition, the ends 15a of the oblong elements 15 of the two groups 40, 41 are arranged at respective mutually opposed parts of the respective profile 16 along the directions S.

Preferably, the oblong elements 15 arranged at the surfaces 11 have the same or a similar coloring as the respective surfaces 11 at a neighbourhood of the respective opening 13 and on the part of the surfaces 11 facing the outside of the volume V. Similarly, the oblong elements 15 arranged at the surface 12 have the same or a similar coloring as the surface 12 at a neighbourhood of the respective opening 14.

The bodywork 10 further comprises a plurality of closing elements 17, which obstruct part of at least some of the openings 13 and which are fixed at the respective profiles 16.

In detail, each closing element 17 is fixed at a portion of the respective opening 13 comprised between the oblong elements 15 covering such opening 13 and the end 10a along the respective direction E. In further detail, each closing element 17 is adjacent and/or juxtaposed to the relative oblong elements 15. Preferably, moreover, each closing element 17 completely obstructs the respective opening 13 below the oblong elements 15 proceeding along the direction E.

In the illustrated embodiment, the closing elements 17 are made of an elastomeric material, for example polyurethane or polyethylene. Preferably, moreover, each opening 13 is associated with one single closing element 17, which is a body made in one single piece. In other words, the closing elements 17 carry out the function of caps of the respective openings 13.

In addition, the closing elements 17 could be fixed to the respective openings 13 in a permanent or releasable manner.

Preferably, the closing elements 17 have the same or a similar coloring as the respective surfaces 11 at a neighbourhood of the respective opening 13 and on the part of the surfaces 11 facing the outside of the volume V.

The operation of the motor vehicle 1 and of the bodywork 10 is described in the following.

During travel, the motor vehicle 1 is hit by an incident air flow and the relative distances between the frame 2 and the wheels 3 vary as a function of the profile of the ground. Consequently, the suspensions 20 undergo shaking parallel to the direction Z.

As is illustrated in Figures 1, 2 and 3, during such shaking, the arms 21 slide within the respective openings 13 and 14 and cooperate in contact with the oblong elements 15, deforming them accordingly.

In detail, the ends 15b of the oblong elements 15 which interact with the arms 21 move away from the respective ends 15a along the direction E, F of the respective opening 13, 14, leaving room for the movement of the arms 21. In further detail, during the movement of the arms 21 parallel to the direction Z, different portions of the groups 40, 41 are deformed along the direction Z.

The oblong elements 15, in turn, at least partially obstruct the respective openings 13, 14, limiting the flow rate of air passing through such openings 13 and 14.

The assembly of the motor vehicle 1 and of the bodywork 10 is described in the following.

In particular, once the frame 2 is available and the suspensions 20 are connected to the respective wheels 3 and to the frame 2, the bodywork 10 is operatively connected to the frame 2.

For such purpose, the bodywork 10 is progressively approached to the frame 2 along the direction Z so that the end 10a faces the frame 2. In particular, the arms 21 are passed through the openings 13 and 14, which extend starting from the end 10a of the bodywork 10.

Preferably, during the approach of the bodywork 10 to the frame 2, the frame 2 is stationary along the direction Z and the bodywork 10 is progressively lowered from above.

Once the approach of the bodywork 10 to the frame 2 is completed, the oblong elements 15 are attached to the respective surfaces 11, 12, so as to partially obstruct the respective openings 13, 14. Otherwise, the attaching of the oblong elements 15 to the bodywork 10 could be performed before the mounting of the bodywork 10 to the frame 2.

Finally, the closing elements 17 are fixed at the profiles 16 of the respective openings 13.

Based on the foregoing, the advantages according to the invention are evident.

In particular, since the bodywork 10 comprises the oblong elements 15, which at least partially obstruct the respective openings 13, 14 and are deformable, it is possible to obtain a motor vehicle 1 in which the suspensions 20 extend partly outside the volume V and the relative shaking is enabled, but the amount of air flow through the openings 13 and 14 is also effectively limited. Therefore, the oblong elements 15 allow enjoying the same advantages related to the arrangement of the suspensions 30 outside the volume V, without causing interferences with the incident air flow and with the bodywork 10 and without having negative effects on the noises transmitted to the passenger compartment.

Since the free ends 15b of the oblong elements 15 belonging to the groups 40 and 41 face each other, during the movement of the arms 21, the area of the openings 13, 14 left uncovered by the oblong elements 15 is particularly limited.

Since the openings 13, 14 extend starting from the end 10a, during the assembly of the motor vehicle 1, the bodywork 10 can be lowered from above onto the frame 2, to which the suspensions 20 have previously been connected.

Since the oblong elements 15 and/or the closing elements 17 have the same or a similar coloring as the respective surfaces 11, 12, the oblong elements 15 and/or the closing elements 17 can be camouflaged without altering the overall aesthetic appearance of the bodywork 10.

Finally, it is clear that modifications and variations can be made to the bodywork 10, the motor vehicle 1 and the method for assembling according to the invention, which do not anyway depart from the scope of protection defined by the claims.

In particular, the bodywork 10 could be integrated and/or welded in the support structure 2.

The bodywork 10 could comprise - in addition or as an alternative to the surfaces 11 facing the wheels 3 arranged on the part of the rear portion 1b - surfaces 11 facing the wheels 3 arranged on the part of the front portion 1a and comprising openings 13 adapted to be passed through by components of the suspensions 20 and at least partially covered by oblong elements 15.

The portions 4 could cover only the wheels 3 arranged on the part of the front portion 1a or only the wheels 3 arranged on the part of the rear portion 1b.

The bodywork 10 may not comprise the portions 4.

All or some wheels 3 could be arranged within the volume V, but some components of the suspensions 20 could anyway be arranged partially outside the volume V.

The openings 13, 14 could be passed through by components of the suspensions 20 besides the arms 21 and/or by other components of the motor vehicle 1 (for example, by components of a steering system of the motor vehicle 1).

The bodywork 10 could comprise one single group 40, 41 of oblong elements 15 for each opening 13, 14 instead of two groups 40, 41. Alternatively, the bodywork 10 could comprise more than two groups 40, 41 of oblong elements 15 for each opening 13, 14.

The suspensions 20 could comprise further arms 21 which do not pass through the openings 13 and 14.

The bodywork 10 could comprise a plurality of closing elements similar to the closing elements 17 and adapted to obstruct part of at least some of the openings 14 and be fixed at the respective profiles 16.

## Claims

1. A bodywork (10) for a motor vehicle (1) comprising:
- a plurality of surfaces (11, 12);
- at least one opening (13, 14) passing through at least one of said surfaces (11, 12) along a first direction (B, C) and configured to be passed through by at least one component (21) of a suspension (20) of said motor vehicle (1);
**characterized in that** it comprises a plurality of oblong elements (15);
each said oblong element (15) comprising a first end (15a) and a second end (15b) opposite to each other along a direction of longitudinal extension (S) of the oblong element (15);
each said oblong element (15) being deformable and attached to one said surface (11, 12) and/or to a portion (16) of said opening (13, 14) at said first end (15a) so as to cover at least partially said opening (13, 14); wherein said second end (15b) of each said element (15) is free and movable with respect to said opening (13, 14).

2. The bodywork according to claim 1, wherein each said oblong element (15) is threadlike or ribbon-like.

3. The bodywork according to claim 1 or 2, wherein said oblong elements (15) are juxtaposed along said first direction (B, C) and/or along a second direction (Z) transversal to said first direction (B, C).

4. The bodywork according to any one of claims 1 to 3, comprising at least one first group (40) and at least one second group (41) of said oblong elements (15), which are juxtaposed along said first direction (B, C) and/or along a second direction (Z) transversal to said first direction (B, C) and covering the same said opening (13, 14);
wherein said second ends (15b) of the oblong elements (15) belonging to said first group (40) face said second ends (15b) of the oblong elements (15) belonging to said second group (41).

5. The bodywork according to any one of the preceding claims, wherein said opening (13, 14) comprises a profile (16), which delimits it;
said bodywork (10) further comprising a closing element (17), which is fixed at said profile (16) and obstructs part of said opening (13, 14).

6. The bodywork according to any one of the preceding claims, wherein said oblong element (15) has the same or a similar coloring as the respective surface (11, 12) at least in a neighbourhood of said opening (13, 14); and/or
wherein said closing element (17) has the same or a similar coloring as the respective surface (11, 12) at least in a neighbourhood of said opening (13, 14).

7. The bodywork according to any one of the preceding claims, comprising a casing (50) defining a volume (V), within which the centre of gravity (G) of said motor vehicle (1) is arranged; said casing (50) comprising said surface (11); and/or
comprising at least one portion (4), which is external to said volume (V) and configured to cover part of a wheel (3) of said motor vehicle (1); said portion (4) comprising said surface (12).

8. The bodywork according to any one of the preceding claims, comprising an end (10a) along said second direction (Z), which is adapted to face, in use, the ground;
wherein said opening (13, 14) extends to said end (10a).

9. A motor vehicle (1) comprising:
- a support structure (2);
- a plurality of wheels (3) rotatable relative to said support structure (2) about respective rotational axes (A);
- a plurality of suspensions (20), which operatively connect said wheels (3) to said support structure (2) and which are configured to allow the relative movement between said wheels (3) and said support structure (2);
- a bodywork (10) according to any one of the preceding claims and defining a volume (V), within which the centre of gravity (G) of said motor vehicle (1) is arranged; said support structure (2) being operatively connected to said bodywork (10) or comprising said bodywork (10);
wherein at least some of said wheels (3) are arranged externally to said volume (V).

10. A method for assembling a motor vehicle (1) comprising the steps of:
i) providing a support structure (2) of said motor vehicle (1);
ii) operatively connecting suspensions (20) of said motor vehicle (1) to respective wheels (3) of said motor vehicle (1) and said support structure (2);
iii) operatively connecting a bodywork (10) to said support structure (2); said bodywork (10) comprising:
- a plurality of surfaces (11, 12);
- at least one opening (13, 14) passing through at least one of said surfaces (11, 12) along a first direction (B, C);
wherein step iii) comprises the further steps of:
iv) bringing said bodywork (10) closer to said support structure (2) along a second direction (Z) transversal to said first direction (B, C);
v) passing at least part (21) of said suspensions (20) through said at least one opening (13, 14) of said bodywork (10) during said step iv); said bodywork (10) comprising an end (10a) along a second direction (Z) and said at least one opening (13, 14) extending to said end (10a) along said second direction (Z);
said method comprising the further step vi) of attaching a plurality of oblong elements (15), which are deformable, to one said surface (11, 12) and/or to one portion (16) of said opening (13, 14) at respective first ends (15a) of said oblong elements (15) so as to cover at least partially said opening (13; 14); said oblong elements (15) further comprising respective second ends (15b) opposite to said respective first ends (15a) along relative directions of longitudinal extension (S); said second ends (15b) being free and movable with respect to said opening (13, 14).

11. The method for assembling according to claim 10, comprising the step vii) of attaching a closing element (17) at a profile (16) of said opening (13, 14), so as to obstruct part of said opening (13, 14).
